(19)

**Europäisches Patentamt**
**European Patent Office**
**Office européen des brevets**

(11) **EP 4 469 970 B1**

(12) **EUROPEAN PATENT SPECIFICATION**

(45) Date of publication and mention
of the grant of the patent:
**24.06.2026 Bulletin 2026/26**

(21) Application number: **22707330.1**

(22) Date of filing: **27.01.2022**

(51) International Patent Classification (IPC):
***G06T 7/12*** *(2017.01)*

(52) Cooperative Patent Classification (CPC):
**G06T 7/12;** G06T 2207/10004; G06T 2207/20068

(86) International application number:
**PCT/CN2022/074430**

(87) International publication number:
**WO 2023/141903 (03.08.2023 Gazette 2023/31)**

(54) **EASY LINE FINDER BASED ON DYNAMIC TIME WARPING METHOD**

EINFACHES LINIENSUCHGERÄT AUF BASIS EINES DYNAMISCHEN
ZEITVERZERRUNGSVERFAHRENS

CHERCHEUR DE LIGNE FACILE BASÉ SUR UN PROCÉDÉ DE DÉFORMATION TEMPORELLE
DYNAMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.12.2024 Bulletin 2024/49**

(73) Proprietor: **Cognex Corporation
Natick, MA 01760 (US)**

(72) Inventors:
- **WANG, Qian**
  **Shanghai 200051 (CN)**
- **WEI, Jiahui**
  **Shanghai 200051 (CN)**
- **LI, Yong**
  **Shanghai 200051 (CN)**

- **FAN, Qianfeng**
  **Shanghai 200051 (CN)**

(74) Representative: **Marks & Clerk LLP
15 Fetter Lane
London EC4A 1BW (GB)**

(56) References cited:
**WO-A1-02/077913    WO-A2-98/18117**

- **MEDIA CYBERNETICS: "Caliper Tool & Edge
  Detection Video Tutorial - Image-Pro Premier", 15
  April 2012 (2012-04-15), XP055945014, Retrieved
  from the Internet <URL:https://www.youtube.
  com/watch?v=1yUKS7kNkZk> [retrieved on
  20220721]**

# Description

## FIELD OF THE INVENTION

The present application relates to machine vision systems, and more particularly to vision system tools that find line features in acquired images.

## BACKGROUND OF THE INVENTION

Machine vision systems (also termed herein, simply "vision systems") are used for a variety of tasks in manufacturing, logistics, and industry. Such tasks can include surface and part inspection, alignment of objects during assembly, reading of patterns and ID codes, and any other operation in which visual data is acquired and interpreted for use in further processes. Vision systems typically employ one or more cameras that acquire images of a scene containing an object or subject of interest. The object/subject can be stationary or in relative motion. Motion can also be controlled by information derived by the vision system, as in the case of manipulation of parts by a robot.

A common task for a vision system is finding and characterizing line features in an image. A variety of tools are used to identify and analyze such line features. Where an image contains multiple lines, such as from a surface having a fixed pattern, or where an image contains texture changes, color changes, and/or albedo changes, such tools may be limited in ability to quickly and accurately identify lines or edges.

WO02077913 discloses structure-guided automatic learning system for image feature enhancement that uses a learning image together with an application domain structure and detection target specification to produce a feature enhancement image processing recipe. An enhancement goodness measure is used to select between alternatives in the learning process. The feature enhancement recipe is used in an application module to process input images and produce a feature enhanced image output. Calipers are used for application domain structure and detection target specification. To unify the processing steps for all caliper specifications, a non-directional box caliper defined region such as a circle caliper or an arc caliper or other connected structures can be converted into a directional box caliper defined region so that a directional box caliper based feature enhancement method can be applied. The process can be inverted to convert a converted directional box caliper region back to the original format.

The video "Caliper Tool & Edge Detection Video Tutorial - Image-Pro Premier" published by Media Cybernetics shows how to set up and use the caliper tool for automated edge detection with Image-Pro Premier.

## SUMMARY OF THE INVENTION

The present application overcomes the disadvantages of the prior art by providing a stable and cost effective line-finding process that that efficiently operates on runtime images having single and multiple edges.

In one example, the at least one line-finding parameter comprises at least one of: search direction; search length; projection width; or polarity.

In one example, the method further includes normalizing the projection data prior to generating the projection signal.

In one example, the line-finding tool comprises at least one caliper.

In one example, the filter signal comprises a first derivative of the projection signal.

In one example, the at least one representative feature comprises at least one line segment.

Another aspect of the disclosure provides a method of identifying a line segment with a vision system, including: operating a line-finding tool that searches at least one runtime image for the at least one feature using at least one caliper; generating a runtime projection signal from runtime projection data associated with the at least one caliper; generating a runtime filter signal from the runtime projection signal; determining a best path by warping and mapping a training projection signal relative to a runtime projection signal and a training filter signal relative to a runtime filter signal; generating a runtime projection index and a runtime filter index using the determined best path and at least one training parameter; determining a confidence index based upon the runtime projection index and the runtime filter index; and identifying at least one line segment from at least one candidate line segment based upon the confidence index.

In one example, the method further includes: configuring at least one line-finding parameter of the line-finding tool prior to operating the line-finding tool.

In one example, the at least one line-finding parameter comprises at least one of: search direction; search length; projection width; or polarity.

In one example, the method further includes normalizing the projection data prior to generating the projection signal.

In one example, the at least one caliper comprises a plurality of calipers.

In one example, the runtime filter signal comprises a first derivative of the runtime projection signal.

In one example, the at least one feature comprises a line segment.

In one example, the warping and mapping comprises dynamically warping and mapping a positional value of the runtime projection signal to a corresponding positional value of the training projection signal.

In one example, the method further includes: refining the position of the identified at least one line segment to a sub-pixel positon.

Another aspect of the disclosure provides a system for identifying a line segment, including: at least one vision camera configured to image a runtime object comprising at least one feature; and a vision system processor configured to: operate a line-finding tool that searches at least one runtime image for the at least one feature using at least one caliper; generate a runtime projection signal from runtime projection data associated with the at least one caliper; generate a runtime filter signal from the runtime projection signal; determine a best path by warping and mapping a training projection signal relative to a runtime projection signal and a training filter signal relative to a runtime filter signal; generate a runtime projection index and a runtime filter index using the determined best path and at least one training parameter; determine a confidence index based upon the runtime projection index and the runtime filter index; and identify at least one line segment from at least one candidate line segment based upon the confidence index.

**BRIEF DESCRIPTION OF THE DRAWINGS**

The invention description below refers to the accompanying drawings, of which:

Fig. 1 is a diagram of an exemplary vision system arrangement acquiring images of an object that includes multiple edge features and a vision system processor including an edge-finding tool/module in accordance with an illustrative embodiment;
Fig. 2A is a runtime image depicting a plurality of edges;
Fig. 2B is a runtime image depicting missing edges;
Fig. 2C is a runtime image depicting distorted scale;
Fig. 2D is a runtime image depicting noise;
Fig. 3A is a flow chart depicting a method of generating a training result according to an illustrative embodiment;
Fig. 3B is a flow chart depicting a method of training golden images according to an illustrative embodiment;
Fig. 4A is a training image depicting an exemplary caliper according to an illustrative embodiment;
Fig. 4B depicts a one-dimensional (1D) projection signal derived from the training image;
Fig. 4C depicts a one-dimensional (1D) filter signal derived from the training image and the projection signal;
Fig. 4D depicts a graphical depiction of a phase index derived from the training image and the projection signal;
Fig. 5A is a flow chart depicting a line-finding and line-fitting process according to an illustrative embodiment;
Fig. 5B is a flow chart depicting a method of determining a projection index in a runtime image
Fig. 5C is a flow chart depicting a method of determining a filter index in a runtime image;
Fig. 5D is a graphical representation of determining the best path between two signals (e.g., training signal to runtime signal) using dynamic time warping;

Fig. 6A is a runtime image depicting an exemplary caliper according to an illustrative embodiment;
Fig. 6B depicts a mapping between a one-dimensional (1D) projection signal derived from the training image and a one-dimensional (1D) projection signal derived from the runtime image in which a scale is distorted;
Fig. 6C depicts a mapping between a one-dimensional (1D) filter signal derived from the training image and the training projection signal and a one-dimensional (1D) filter signal derived from the runtime image and the runtime projection signal in which a scale is distorted;
Fig. 7A is a runtime image depicting an exemplary caliper according to an illustrative embodiment;
Fig. 7B depicts a mapping between a one-dimensional (1D) projection signal derived from the training image and a one-dimensional (1D) projection signal derived from the runtime image in which noise is present;
Fig. 7C depicts a mapping between a one-dimensional (1D) filter signal derived from the training image and the training projection signal and a one-dimensional (1D) filter signal derived from the runtime image and the runtime projection signal in which noise is present;
Fig. 8A is a runtime image depicting an exemplary caliper according to an illustrative embodiment;
Fig. 8B depicts a mapping between a one-dimensional (1D) projection signal derived from the training image and a one-dimensional (1D) projection signal derived from the runtime image in which some edges are missing; and
Fig. 8C depicts a mapping between a one-dimensional (1D) filter signal derived from the training image and the training projection signal and a one-dimensional (1D) filter signal derived from the runtime image and the runtime projection signal in which some edges are missing.

**DETAILED DESCRIPTION**

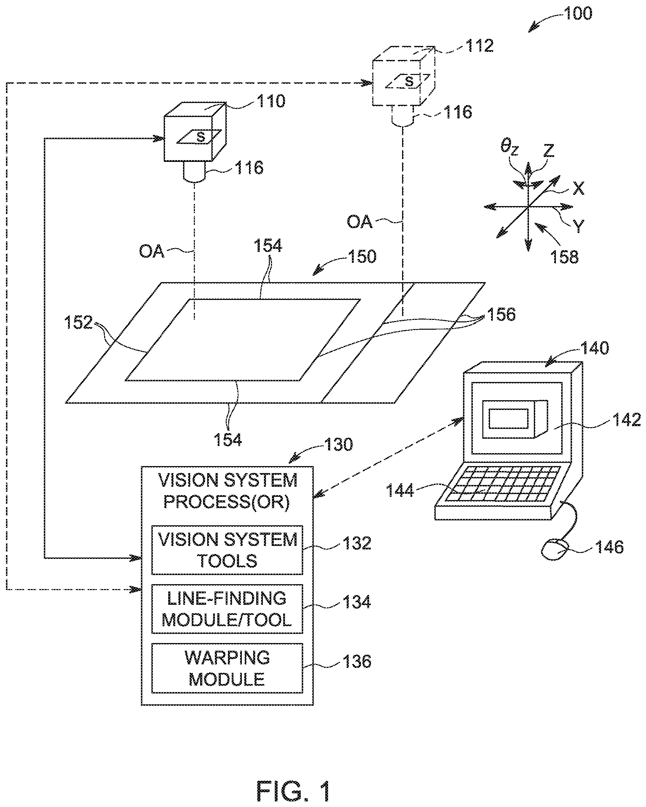

An exemplary vision system arrangement 100 that can be employed according to an illustrative embodiment is shown in Fig. 1. The system 100 includes at least one vision system camera 110, and can include one or more additional, optional cameras 112 (shown in phantom). The illustrative camera(s) 110, 112 include(s) an image sensor (or imager) S and associated electronics for acquiring and transmitting image frames to a vision system process(or) 130 that can be instantiated in a standalone processor and/or a computing device 140. The camera 110 (and 112) includes an appropriate lens/optics 116 focused upon a scene that contains an object 150 under inspection. The camera 110 (and 112) can include internal and/or external illuminators (not shown) that operate in accordance with the image acquisition process. The computing device 140 can be any acceptable processor-based system capable of storing and manipulating image data in accordance with the illustrative embodiment. For example, the computing device 140 can comprise a PC (as shown), server, laptop, tablet, smartphone or other similar device. The computing device 140 can include appropriate peripherals, such as a bus-based image capture card that interconnects to the camera. In alternate embodiments, the vision processor can be partially or fully contained within the camera body itself and can be networked with other PCs, servers and/or camera-based processors that share and process image data. The computing device 140 optionally includes an appropriate display 142, which can support an appropriate graphical user interface (GUI) that can operate in accordance with vision system tools and processors 132 provided in the vision system process(or) 130. Note that a display can be omitted in various embodiments and/or provided only for setup and service functions. The vision system tools can be part of any acceptable software and/or hardware package that is acceptable for use in the inspection of objects, such as those commercially available from Cognex Corporation of Natick, MA. The computing device can also include associated user interface (UI) components, including, for example, a keyboard 144 and mouse 146, as well as a touchscreen within the display 142.

The camera(s) 110 (and, optionally 112) image some or all of an object 150 located within the scene. Each camera defines an optical axis OA, around which a field of view is established based upon the optics 116, focal distance, etc. The object 150 includes a plurality of edges 152, 154 and 156 that are respectively arranged in different directions. For example, the object edges can comprise those of a cover glass mounted within a smartphone body. Illustratively, the camera(s) can image the entire object, or specific locations (e.g. corners where the glass meets the body). A (common) coordinate space can be established with respect to the object, one of the cameras or another reference point (for example a moving stage upon which the object 150 is supported). As shown, the coordinate space is represented by axes 158. These axes illustratively define orthogonal x, y and z axes and rotation $\Theta_z$ about the z axis in the x-y plane.

According to an illustrative embodiment, the vision system process 130 interoperates with one or more applications/processes (running on the computing device 140) that collectively comprise a set of vision system tools/processes 132. These tools can include a variety of conventional and specialized algorithms that are used to resolve image data-for example a variety of calibration tools and affine transform tools can be used to transform acquired image data to a predetermined (e.g. common) coordinate system. Tools that convert image grayscale intensity data to a binary image based upon a predetermined threshold can also be included. Likewise, tools that analyze the gradient of intensity (contrast) between adjacent image pixels (and subpixels) can be provided.

The vision system process(or) 130 includes a line-finding process, tool or module 134 that locates one or more lines in an acquired image according to an illustrative embodiment. The vision system process(or) 130 also includes a warping process, tool or module 136 that operates on data from one or more identified lines according to an illustrative embodiment.

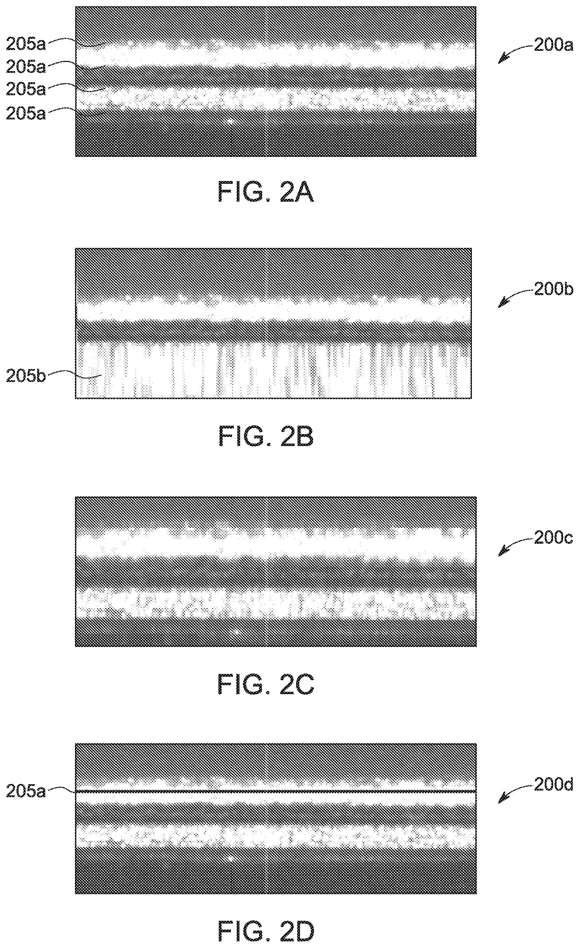

Reference is, thus, made to Fig. 2A, which depicts a runtime image 200a depicting a plurality of edges 205a. Figs. 2B-D depict runtime images 200b-d in which edges are missing (e.g., missing edge 205b in Fig. 2B), the scale is distorted (Fig. 2C), and noise is present (e.g., noise 205d in Fig. Fig. 2D). The present application advantageously and efficiently locates one or more lines corresponding to object edges, even where such artifacts are present in runtime images.

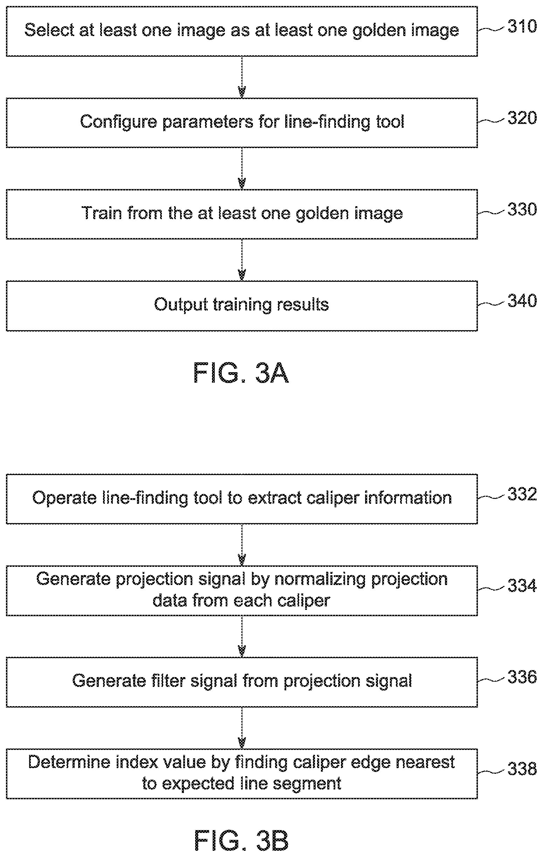

Fig. 3A is a flow chart depicting a method of generating a training result according to an illustrative embodiment, and is described in detail below.

At block (each block herein also representing one or more process step(s)) 310, at least one image is selected as the at least one training image, which at least one training image can comprise at least one golden image. The selected at least one golden image can be selected from an image set (e.g., acquired by vision system camera(s) 110-112, or by any other camera assembly) such that the golden image includes features (e.g., edges or lines (e.g., line segment(s)) corresponding to edges) that are the representative of one or more features (e.g., edges or lines (e.g., line segment(s)) corresponding to edges) of the physical object being imaged. In one example, the image set from which the at least one golden image is selected is acquired using predetermined acquisition parameters and under predetermined illumination conditions. Such predetermined acquisition and illumination conditions can be selected such that they are identical to conditions used in runtime image acquisition. In other examples, the at least one golden image is a model image, such as a CAD model.

At block 320, optionally, one or more parameters are configured for the line-finding tool. Such parameters can include, for example, a search direction, a search length, a projection width, and a polarity.

At block 330, one or more training results are trained from the at least one golden image. This is explained in greater detail with reference to Fig. 3B.

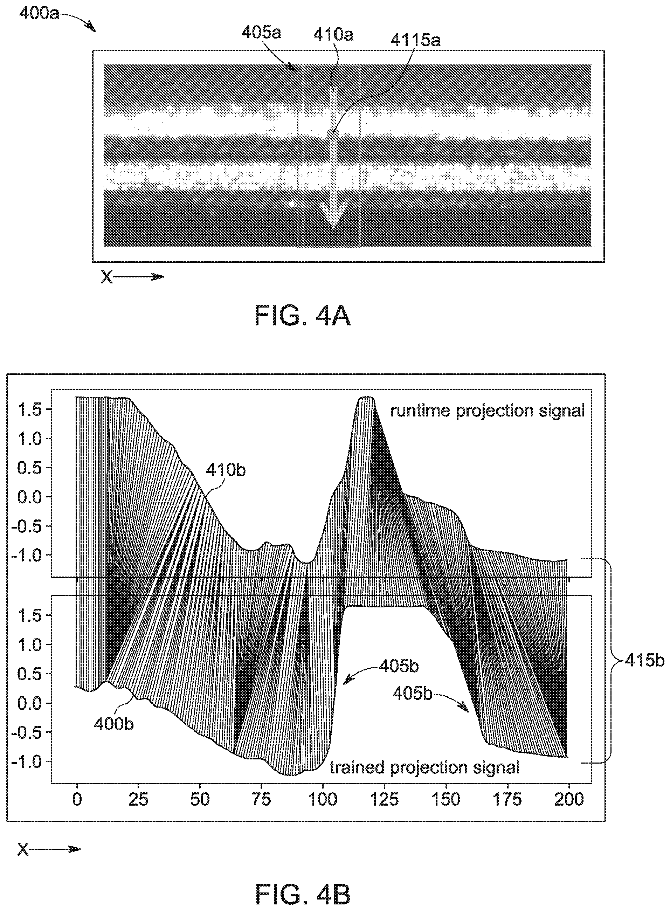

At block 332, the line-finding tool operates on the at least one golden image at block 332 to search for at least one representative feature (e.g., edges or lines (e.g., line segment(s)) corresponding to an edge) using at least one caliper. The line-finding tool operates according to the one or more parameters optionally configured at block 320. Fig. 4A depicts a training image 400a and an exemplary caliper 410a. In this example, the caliper 410a operates on a section 405a and searches for one or more representative features (e.g., edges 415a) according to the one or more parameters. The line-finding tool can use image intensity, or can advantageously use gradient values and/or gradient fields to find such representative features. Such line-finding tool is described at US 10,152,780, filed on October 31, 2016, entitled "SYSTEM AND METHOD FOR FINDING LINES IN AN IMAGE WITH A VISION SYSTEM" by Hsu et al.

While only one caliper 410a is depicted, it is understood that one or more calipers 410a can be implemented in one or more sections 405a with respect to the training image 400a in order to search for and identify one or more edges 415a.

At block 334, a one-dimensional training projection signal is generated by normalizing the projection data for each caliper instantiated by the line-finding tool, with the projection data representing a reduction of a 2D array of pixels from the image to a 1D array of pixels. In this regard, pixels of the projected caliper that overlap with the 2D array of pixels are summed along respective rays of the projected caliper in the search direction, with the sum along each ray corresponding to the 1D pixel value. An exemplary training projection signal 400b is depicted at Fig. 4B. As shown, the training projection signal 400b represents the presence of edges (e.g., 405b) in the projection data from the at least one golden image. The x-axis of the training projection signal 400b corresponds to a numerical search length for each caliper along the search direction of the caliper (e.g., millimeters, etc.) or can correspond to an arbitrary distance unit. The y-axis of the training projection signal represents a projected intensity value from the at least one training image. Also depicted is a runtime projection signal 410b and a mapping 415b between the signals 400b and 410b, which will be explained in greater detail below.

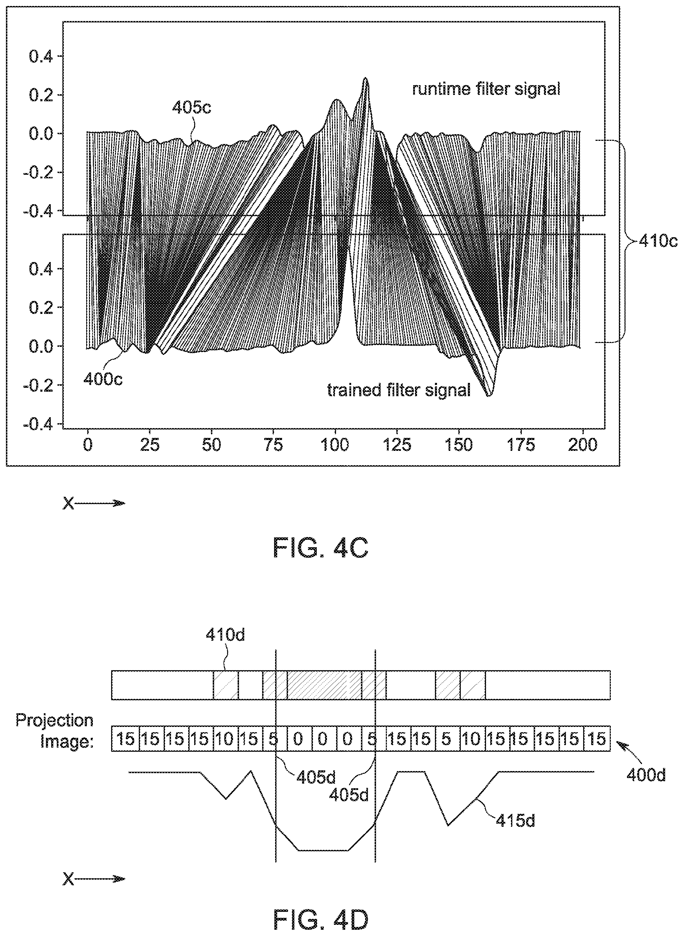

At block 336, a training filter signal 400c is generated from the training projection signal 400b. An exemplary training filter signal is depicted at Fig. 4C. Also depicted is a runtime filter signal 405c and a mapping 410c between the signals 400c and 405c, which will be explained in greater detail below. In one example, the training filter signal 400c can be a first derivative of the training projection signal generated at block 334. In another example, the training filter signal can be represented by the following equation:

$$f(x_n) = \frac{P(x_{n+1}) - P(x_{n-1})}{2}$$

In the eqtiation above, $P(x_n)$ refers to the training projection signal value at the index $n$ and $f(x_n)$ refers to the training filter signal value.

At block 338, a training index is determined by finding a caliper edge nearest to an expected feature (e.g., edge or line (e.g., line segment(s)). An exemplary training index 400d is depicted at Fig. 4D relative to a 1D training projection signal 410d and a graphical representation of the 1D training projection signal 415d. The training index refers to expected position of an edge in the 1D signal. As shown in Fig. 4D, this corresponds to edges 405d1 and 405d, which index of edge 405d1 being 7 and corresponding to intensity value of 5 at the 7th position along the search direction of the caliper corresponds to the training.

At block 340, the training results are outputted (and/or stored) for use during a runtime process. The training results can include the results from blocks 330-338, including at least one training projection signal, at least one training filter signal, and/or at least one training index value.

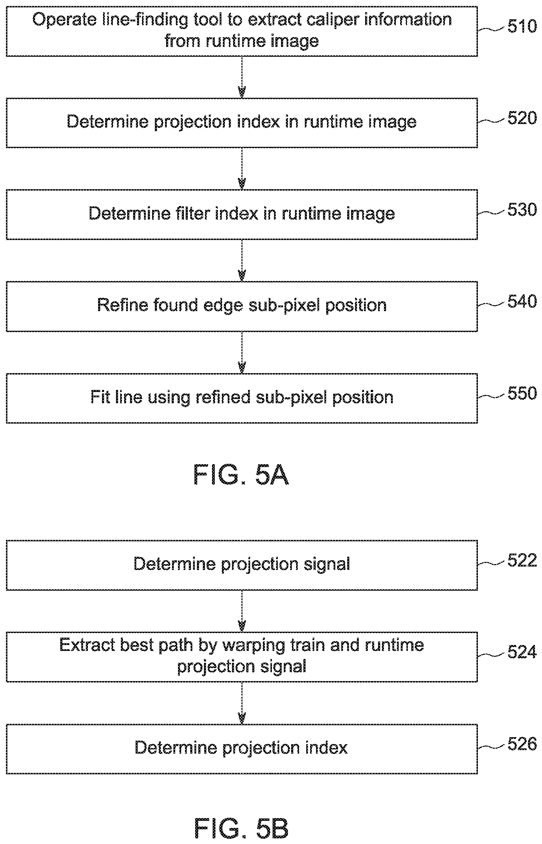

Fig. 5A is a flow chart depicting a runtime line-finding and runtime line-fitting process according to an illustrative embodiment.

At block 510, a line-finding tool operates on a runtime image to extract caliper information from the runtime image, with the caliper information including runtime projection data, runtime filter data, and one or more edges identified by the line-finding tool. The line-finding tool can operate similar to block 332 in that the line-finding tool operates on the runtime image to search for at least one representative feature (e.g., edge or line (e.g., line segment(s)) corresponding to an edge) using at least one caliper.

At block 520, a runtime projection index is determined in the runtime image. This is explained in greater detail with reference to Fig. 5B.

With reference to Fig. 5B, a runtime projection signal is determined at block 522. This can be done by normalizing the runtime projection data from each caliper instantiated by the line-finding tool. As described above, the runtime projection data represents a reduction of a 2D array of pixels from the runtime image to a 1D array of pixels.

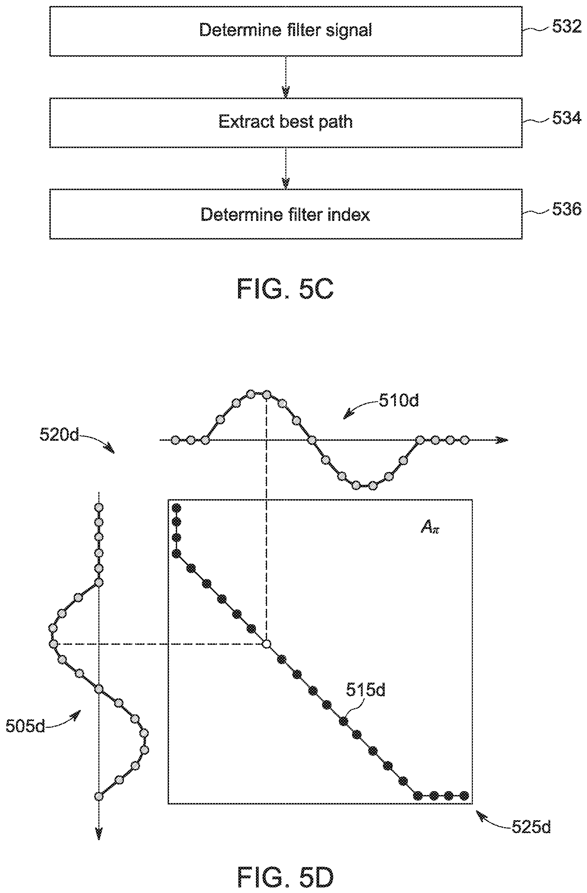

At block 524, a best path is extracted by warping (e.g., dynamic time warping) and mapping the training projection signal relative to the runtime projection signal. An example of warping (e.g., dynamic time warping) and mapping is depicted in Fig. 5D.

In this example, two signals 505d and 510d are warped and mapped relative to one another to arrive at a best path 515d (also referred to as a "match result" or a "mapping result"). The best path 515d represents a mapping from column to column of the first signal 505d and the second signal 510d that minimizes a sum of distances between matched features from a first end 520d of the best path 515d to a second end 525d of the best path. The use of dynamic time warping advantageously allows a mapping from points in the first signal 505d to corresponding points in the second signal 510d where one of the signals experiences distortion, missing features, excess noise, or other unwanted artifacts.

Returning to block 524, the training projection signal is warped (e.g., dynamic time warping) and mapped relative to the runtime projection signal to generate a projection best path indicative of a mapping between the training projection signal and the runtime projection signal. In particular, the warping and mapping can dynamically warp and map a positional value of the runtime projection signal to a corresponding positional value of the training projection signal. This warping and mapping is also depicted with reference to Fig. 4B, in which the training projection signal 400b is dynamically warped and mapped relative to runtime projection signal 410b. Here, a correspondence between training projection signal 400b and runtime projection signal 410b is depicted visually 415b as correspondences between the signals 400b and 410b.

At block 526, a runtime projection index is determined by using the best projection path and the training index value. Since the projection best path represents a paired index between training and runtime projection signal, the corresponding runtime projection index can be determined with the projection best path and the training index value.

At block 530, a runtime filter index is determined in the runtime image. This is explained in greater detail with reference to Fig. 5C.

At block 532, a runtime filter signal is determined. In one example, the runtime filter signal is a first derivative of the runtime projection signal. In another example, the runtime filter signal can be represented by the following equation:

$$f(x_n) = \frac{P(x_{n+1}) - P(x_{n-1})}{2}$$

In the equation above, $P(x_n)$ refers to the runtime projection signal value at the index $n$ and $f(x_n)$ refers to the runtime filter signal value.

At block 534, a filter best path is extracted by dynamically warping (e.g., dynamic time warping) and mapping the training filter signal relative to the runtime filter signal. As described above, the training filter signal and the runtime filter signal are dynamically warped and mapped to generate a best path indicative of a mapping between the training filter signal and the runtime filter signal. In this regard, the warping and mapping can dynamically warp and map a positional value of the runtime filter signal to a corresponding positional value of the training filter signal. This mapping is also depicted with reference to Fig. 4C, in which the training filter signal 400c is dynamically warped and mapped relative to runtime filter signal 405c. Here, a correspondence between training filter signal 400c and runtime filter signal 405c is depicted visually 410c as correspondences between the signals 400c and 405c.

At block 536, a runtime filter index is determined using the filter best path and the training index value. Since the filter best path represents a paired index between training and runtime filter signals, the corresponding runtime filter index can be determined with the filter best path and the training index value.

At block 540, one or more found edges are refined to a sub-pixel position. This can be done using the runtime filter index and the runtime projection index.

For example, a confidence index can be generated by comparing the projection index with the filter index. The projection index and the filter index are expected to be equal or near equal. The confidence index thus represents a difference between projection index and filter index, with the best fitting edge corresponding to a lowest confidence index. The best candidate edge can be chosen according to a highest confidence index from a plurality of candidate edges. In another example, the polarity and distance can be used to refine the sub-pixel position or to select the best candidate edge.

At block 550, a line segment is fit to the found edges according to the refined sub-pixel position. A line-fitting procedure can iteratively be operated in order to reduce a root mean square (RMS) error between one or more candidate lines and the refined found edges.

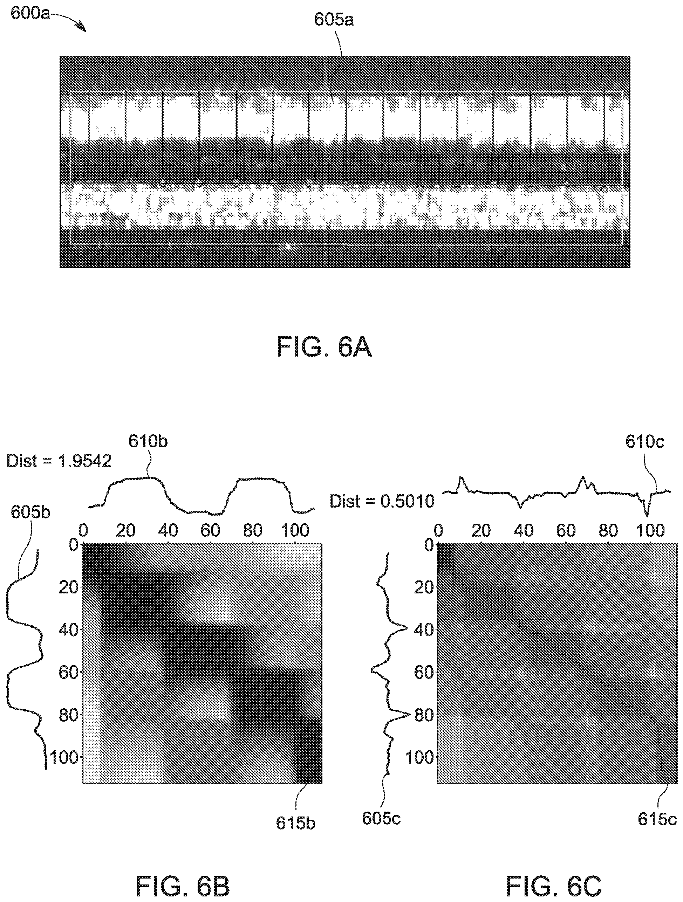

Fig. 6A is a runtime image 600a depicting exemplary calipers 605a according to an illustrative embodiment. In this example, a scale of the runtime image 600a is distorted.

Fig. 6B depicts a mapping between a one-dimensional (1D) projection signal 605b derived from the training image and a one-dimensional (1D) projection signal 610b derived from the runtime image in which a scale is distorted. As shown, a best path 615b is determined by dynamic time warping. The distorted scale can be seen in the runtime projection signal 610b. The best path 615b maps the training projection signal relative to the runtime projection signal such that edges in each can be mapped relative to one another, irrespective of the distorted scale.

Fig. 6C depicts a mapping between a one-dimensional (1D) filter signal 605c derived from the training image and a one-dimensional (1D) filter signal 610c derived from the runtime image in which a scale is distorted. As shown, a best path 615c is determined by dynamic time warping. The distorted scale can be seen in the runtime projection signal 610c. The best path 615c maps the training projection signal relative to the runtime projection signal such that edges in each can be mapped relative to one another, irrespective of the distorted scale.

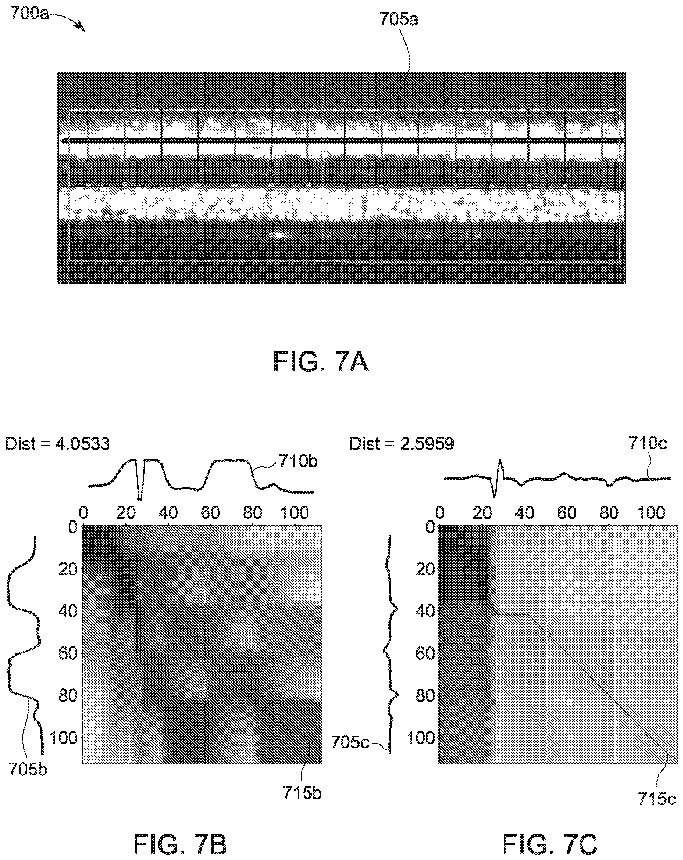

Fig. 7A is a runtime image depicting exemplary calipers 705a according to an illustrative embodiment. In this example, noise is present in the runtime image 700a.

Fig. 7B depicts a mapping between a one-dimensional (1D) projection signal 705b derived from the training image and a one-dimensional (1D) projection signal 7210b derived from the runtime image in which noise is present. As shown, a best path 715b is determined by dynamic time warping. The distorted scale can be seen in the runtime projection signal 710b. The best path 715b maps the training projection signal relative to the runtime projection signal such that edges in each can be mapped relative to one another, irrespective of the noise present in the runtime image.

Fig. 7C depicts a mapping between a one-dimensional (1D) filter signal 705c derived from the training image and a one-dimensional (1D) filter signal 710c derived from the runtime image in which noise is present. As shown, a best path 715c is determined by dynamic time warping. The distorted scale can be seen in the runtime projection signal 710c. The best path 715c maps the training projection signal relative to the runtime projection signal such that edges in each can be mapped relative to one another, irrespective of the noise present in the runtime image.

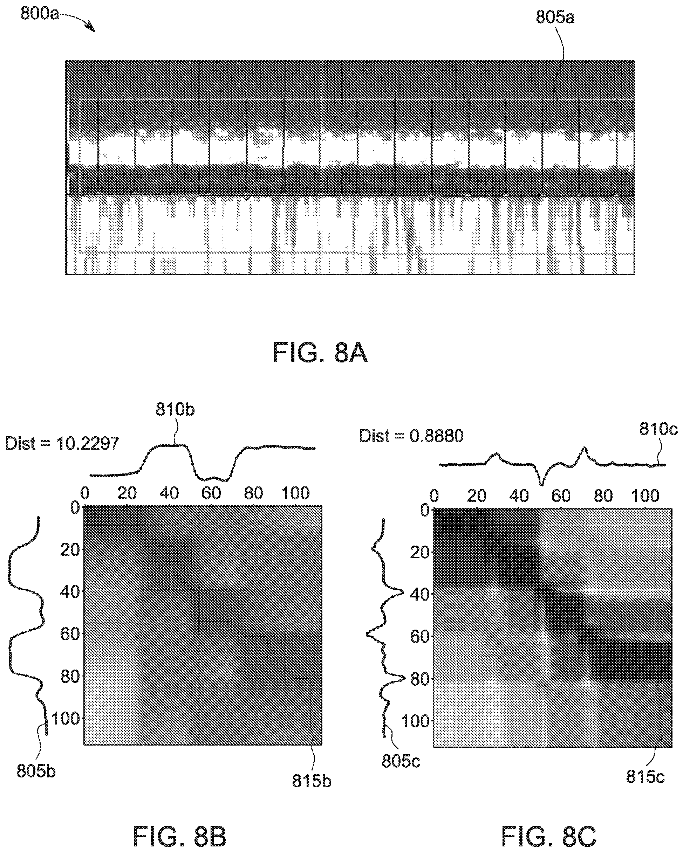

Fig. 8A is a runtime image depicting exemplary calipers 805a according to an illustrative embodiment. In this example, one or more edges are missing in the runtime image 800a.

Fig. 8B depicts a mapping between a one-dimensional (1D) projection signal 805b derived from the training image and a one-dimensional (1D) projection signal 810b derived from the runtime image in which some edges are missing. As shown, a best path 815b is determined by dynamic time warping. The missing edge can be seen in the runtime projection signal 810b. The best path 815b maps the training projection signal relative to the runtime projection signal such that edges in each can be mapped relative to one another, irrespective of the missing edges in the runtime image.

Fig. 8C depicts a mapping between a one-dimensional (1D) filter signal 805c derived from the training image and a one-dimensional (1D) filter 810c signal derived from the runtime image in which some edges are missing. As shown, a best path 815c is determined by dynamic time warping. The distorted scale can be seen in the runtime projection signal 810c. The best path 815c maps the training projection signal relative to the runtime projection signal such that edges in each can be mapped relative to one another, irrespective of the noise present in the runtime image.

It should be clear that the line-finder provided according to the system, and method and various alternate embodiments/improvements is an effective and robust tool for determining multiple line features under a variety of conditions. In general, when used to find line features, the system and method has no particular limit on the maximum number of lines to be found in an image. Only memory and compute time will place practical limits on the number of lines that can be found.

The foregoing has been a detailed description of illustrative embodiments of the invention. Furthermore, while the foregoing describes a number of separate embodiments of the apparatus and method of the present invention, what has been described herein is merely illustrative of the application of the principles of the present invention. For example, as used herein the terms "process" and/or "processor" should be taken broadly to include a variety of electronic hardware and/or software based functions and components (and can alternatively be termed functional "modules" or "elements"). Moreover, a depicted process or processor can be combined with other processes and/or processors or divided into various sub-processes or processors. Such sub-processes and/or sub-processors can be variously combined according to embodiments herein. Likewise, it is expressly contemplated that any function, process and/or processor herein can be implemented using electronic hardware, software consisting of a non-transitory computer-readable medium of program instructions, or a combination of hardware and software. Additionally, as used herein various directional and dispositional terms such as "vertical", "horizontal", "up", "down", "bottom", "top", "side", "front", "rear", "left", "right", and the like, are used only as relative conventions and not as absolute directions/dispositions with respect to a fixed coordinate space, such as the acting direction of gravity. Additionally, where the term "substantially" or "approximately" is employed with respect to a given measurement, value or characteristic, it refers to a quantity that is within a normal operating range to achieve desired results, but that includes some variability due to inherent inaccuracy and error within the allowed tolerances of the system (e.g. 1-5 percent). Accordingly, this description is meant to be taken only by way of example, and not to otherwise limit the scope of this invention.

## Claims

1. A method of identifying a line segment with a vision system, comprising:

   operating (510) a line-finding tool that searches at least one runtime image for the at least one feature using at least one caliper;
   generating (522) a runtime projection signal from runtime projection data associated with the at least one caliper;
   generating (532) a runtime filter signal from the runtime projection signal;
   determining a best path by warping and mapping a training projection signal relative to a runtime projection signal (524) and a training filter signal relative to a runtime filter signal (534);
   generating a runtime projection index (526) and a runtime filter index (536) using the determined best path and at least one training parameter;
   determining a confidence index based upon the runtime projection index and the runtime filter index; and
   identifying at least one line segment from at least one candidate line segment based upon the confidence index.

2. The method of claim 1, further comprising:
   configuring at least one line-finding parameter of the line-finding tool prior to operating the line-finding tool.

3. The method of claim 2, wherein the at least one line-finding parameter comprises at least one of: search direction; search length; projection width; or polarity.

4. The method of any preceding claim, further comprising normalizing the projection data prior to generating the projection signal.

5. The method of any preceding claim, wherein the runtime filter signal comprises a first derivative of the runtime projection signal.

6. The method of any preceding claim, wherein the at least one feature comprises a line segment.

7. The method of any preceding claim, wherein the warping and mapping comprises dynamically warping and mapping a positional value of the runtime projection signal to a corresponding positional value of the training projection signal.

8. The method of any preceding claim, further comprising:
refining the position of the identified at least one line segment to a sub-pixel position.

9. A system for identifying a line segment, comprising:

at least one vision camera (110) configured to image a runtime object (150) comprising at least one feature; and
a vision system processor (130) configured to:

operate (510) a line-finding tool that searches at least one runtime image for the at least one feature using at least one caliper;
generate (522) a runtime projection signal from runtime projection data associated with the at least one caliper;
generate (532) a runtime filter signal from the runtime projection signal;
determine a best path by warping and mapping a training projection signal relative to a runtime projection signal (524) and a training filter signal relative to a runtime filter signal (534);
generate a runtime projection index (526) and a runtime filter index (536) using the determined best path and at least one training parameter;
determine a confidence index based upon the runtime projection index and the runtime filter index; and
identify at least one line segment from at least one candidate line segment based upon the confidence index.

10. The system of claim 9, wherein the vision system processor is configured to configure at least one line-finding parameter of the line-finding tool prior to operating the line-finding tool.

11. The system of claim 9 or 10, wherein the vision system processor is configured to normalize the projection data prior to generating the projection signal.

12. The system of any of claims 9 to 11, wherein the runtime filter signal comprises a first derivative of the runtime projection signal.

13. The system of any of claims 9 to 12, wherein the at least one feature comprises a line segment.

14. The system of any of claims 9 to 13, wherein the warping and mapping comprises dynamically warping and mapping a positional value of the runtime projection signal to a corresponding positional value of the training projection signal.

15. The system of any of claims 9 to 14, wherein the vision system processor is configured to refine the position of the identified at least one line segment to a sub-pixel position.

**Patentansprüche**

1. Verfahren zum Identifizieren eines Liniensegments mit einem Sichtsystem, umfassend:

Betreiben (510) eines Liniensuchwerkzeugs, das mindestens ein Laufzeitbild unter Verwendung mindestens einer Schieblehre nach dem mindestens einen Merkmal durchsucht;
Erzeugen (522) eines Laufzeitprojektionssignals aus Laufzeitprojektionsdaten, die der mindestens einen Schieblehre zugeordnet sind;
Erzeugen (532) eines Laufzeitfiltersignals aus dem Laufzeitprojektionssignal;
Bestimmen eines besten Pfades durch Verzerren und Abbilden eines Trainingsprojektionssignals in Bezug zu einem Laufzeitprojektionssignal (524) und eines Trainingsfiltersignals in Bezug zu einem Laufzeitfiltersignal (534);
Erzeugen eines Laufzeitprojektionsindex (526) und eines Laufzeitfilterindex (536) unter Verwendung des bestimmten besten Pfades und mindestens eines Trainingsparameters;
Bestimmen eines Konfidenzindex basierend auf dem Laufzeitprojektionsindex und dem Laufzeitfilterindex; und
Identifizieren mindestens eines Liniensegments aus mindestens einem Kandidaten-Liniensegment basierend auf dem Konfidenzindex.

2. Verfahren nach Anspruch 1, weiter umfassend:

Konfigurieren mindestens eines Liniensuchparameters des Liniensuchwerkzeugs vor Betreiben des Liniensuchwerkzeugs.

3. Verfahren nach Anspruch 2, wobei der mindestens eine Liniensuchparameter mindestens eines umfasst von: Suchrichtung; Suchlänge; Projektionsbreite; oder Polarität.

4. Verfahren nach einem vorstehenden Anspruch, weiter umfassend Normalisieren der Projektionsdaten vor Erzeugen des Projektionssignals.

5. Verfahren nach einem vorstehenden Anspruch, wobei das Laufzeitfiltersignal eine erste Ableitung des Laufzeitprojektionssignals umfasst.

6. Verfahren nach einem vorstehenden Anspruch, wobei das mindestens eine Merkmal ein Liniensegment umfasst.

7. Verfahren nach einem vorstehenden Anspruch, wobei das Verzerren und Abbilden dynamisches Verzerren und Abbilden eines Positionswertes des Laufzeitprojektionssignals zu einem entsprechenden Positionswert des Trainingsprojektionssignals umfasst.

8. Verfahren nach einem vorstehenden Anspruch, weiter umfassend:
Verfeinern der Position des identifizierten mindestens einen Liniensegments auf eine Subpixel-Position.

9. System zum Identifizieren eines Liniensegments, umfassend:

mindestens eine Sichtkamera (110), die konfiguriert ist, um ein Laufzeitobjekt (150) abzubilden, das mindestens ein Merkmal umfasst; und einen Sichtsystemprozessor (130), der konfiguriert ist, um:

ein Liniensuchwerkzeug zu betreiben (510), das mindestens ein Laufzeitbild unter Verwendung mindestens einer Schieblehre nach dem mindestens einen Merkmal durchsucht;
ein Laufzeitprojektionssignal aus Laufzeitprojektionsdaten, die der mindestens einen Schieblehre zugeordnet sind, zu erzeugen (522);
ein Laufzeitfiltersignal aus dem Laufzeitprojektionssignal zu erzeugen (532);
einen besten Pfad durch Verzerren und Abbilden eines Trainingsprojektionssignals in Bezug zu einem Laufzeitprojektionssignal (524) und eines Trainingsfiltersignals in Bezug zu einem Laufzeitfiltersignal (534) zu bestimmen;
einen Laufzeitprojektionsindex (526) und einen Laufzeitfilterindex (536) unter Verwendung des bestimmten besten Pfades und mindestens eines Trainingsparameters zu erzeugen;
einen Konfidenzindex basierend auf dem Laufzeitprojektionsindex und dem Laufzeitfilterindex zu bestimmen; und
mindestens ein Liniensegment aus mindestens einem Kandidaten-Liniensegment basierend auf dem Konfidenzindex zu identifizieren.

10. System nach Anspruch 9, wobei der Sichtsystemprozessor konfiguriert ist, um mindestens einen Linienfindungsparameter des Liniensuchwerkzeugs vor Betreiben des Liniensuchwerkzeugs zu konfigurieren.

11. System nach Anspruch 9 oder 10, wobei der Sichtsystemprozessor konfiguriert ist, um die Projektionsdaten vor Erzeugen des Projektionssignals zu normalisieren.

12. System nach einem der Ansprüche 9 bis 11, wobei das Laufzeitfiltersignal eine erste Ableitung des Laufzeitprojektionssignals umfasst.

13. System nach einem der Ansprüche 9 bis 12, wobei das mindestens eine Merkmal ein Liniensegment umfasst.

14. System nach einem der Ansprüche 9 bis 13, wobei das Verzerren und Abbilden dynamisches Verzerren und Abbilden eines Positionswertes des Laufzeitprojektionssignals zu einem entsprechenden Positionswert des Trainingsprojektionssignals umfasst.

15. System nach einem der Ansprüche 9 bis 14, wobei der Sichtsystemprozessor konfiguriert ist, um die Position des identifizierten mindestens einen Liniensegments auf eine Subpixel-Position zu verfeinern.

**Revendications**

1. Procédé d'identification d'un segment de ligne avec un système de vision, comprenant :

l'utilisation (510) d'un outil de recherche de ligne qui recherche au moins une image d'exécution pour l'au moins une caractéristique en utilisant au moins un calibre ;
la génération (522) d'un signal de projection d'exécution à partir de données de projection d'exécution associées à l'au moins un calibre ;

la génération (532) d'un signal de filtre d'exécution à partir du signal de projection d'exécution ; la détermination d'un meilleur chemin en déformant et en cartographiant un signal de projection d'entraînement par rapport à un signal de projection d'exécution (524) et un signal de filtre d'entraînement par rapport à un signal de filtre d'exécution (534) ; la génération d'un index de projection d'exécution (526) et d'un index de filtre d'exécution (536) en utilisant le meilleur chemin déterminé et au moins un paramètre d'entraînement ; la détermination d'un indice de confiance sur la base de l'indice de projection d'exécution et l'indice de filtre d'exécution ; et l'identification d'au moins un segment de ligne à partir d'au moins un segment de ligne candidat sur la base de l'indice de confiance.

2. Procédé selon la revendication 1, comprenant en outre :
la configuration d'au moins un paramètre de recherche de ligne de l'outil de recherche de ligne avant l'utilisation de l'outil de recherche de ligne.

3. Procédé selon la revendication 2, dans lequel l'au moins un paramètre de recherche de ligne comprend au moins un parmi : direction de recherche ; longueur de recherche ; largeur de projection ; ou polarité.

4. Procédé selon une quelconque revendication précédente, comprenant en outre la normalisation des données de projection avant la génération du signal de projection.

5. Procédé selon une quelconque revendication précédente, dans lequel le signal du filtre d'exécution comprend une première dérivée du signal de projection d'exécution.

6. Procédé selon une quelconque revendication précédente, dans lequel l'au moins une caractéristique comprend un segment de ligne.

7. Procédé selon une quelconque revendication précédente, dans lequel la déformation et la cartographie comprennent la déformation et la cartographie de manière dynamique d'une valeur positionnelle du signal de projection d'exécution avec une valeur positionnelle correspondante du signal de projection d'entraînement.

8. Procédé selon une quelconque revendication précédente, comprenant en outre :
l'affinement de la position de l'au moins un segment de ligne identifié à une position sous-pixel.

9. Système d'identification d'un segment de ligne, comprenant :

au moins une caméra de vision (110) configurée pour imager un objet d'exécution (150) comprenant au moins une caractéristique ; et
un processeur de système de vision (130) configuré pour :

utiliser (510) un outil de recherche de ligne qui recherche au moins une image d'exécution pour l'au moins une caractéristique en utilisant au moins un calibre ;
générer (522) un signal de projection d'exécution à partir de données de projection d'exécution associées à l'au moins un calibre ;
générer (532) un signal de filtre d'exécution à partir du signal de projection d'exécution ;
déterminer un meilleur chemin en déformant et en cartographiant un signal de projection d'entraînement par rapport à un signal de projection d'exécution (524) et un signal de filtre d'entraînement par rapport à un signal de filtre d'exécution (534) ;
générer un index de projection d'exécution (526) et d'un index de filtre d'exécution (536) en utilisant le meilleur chemin déterminé et au moins un paramètre d'entraînement ;
déterminer un indice de confiance sur la base de l'indice de projection d'exécution et l'indice de filtre d'exécution ; et
identifier au moins un segment de ligne à partir d'au moins un segment de ligne candidat sur la base de l'indice de confiance.

10. Système selon la revendication 9, dans lequel le processeur du système de vision est configuré pour configurer au moins un paramètre de recherche de ligne de l'outil de recherche de ligne avant d'utiliser l'outil de recherche de ligne.

11. Système selon la revendication 9 ou 10, dans lequel le processeur de système de vision est configuré pour normaliser les données de projection avant de générer le signal de projection.

12. Système selon l'une quelconque des revendications 9 à 11, dans lequel le signal de filtre d'exécution comprend une première dérivée du signal de projection d'exécution.

13. Système selon l'une quelconque des revendications 9 à 12, dans lequel l'au moins une caractéristique comprend un segment de ligne.

14. Système selon l'une quelconque des revendications 9 à 13, dans lequel la déformation et la cartographie comprennent la déformation et la cartographie de manière dynamique d'une valeur positionnelle du signal de projection d'exécution avec une valeur positionnelle correspondante du signal de projection d'entraînement.

15. Système selon l'une quelconque des revendications 9 à 14, dans lequel le processeur de système de vision est configuré pour affiner la position d'au moins un segment de ligne identifié à une position sous-pixel.

FIG. 1

EP 4 469 970 B1

FIG. 2A

FIG. 2B

FIG. 2C

FIG. 2D

13

Select at least one image as at least one golden image —— 310

Configure parameters for line-finding tool —— 320

Train from the at least one golden image —— 330

Output training results —— 340

FIG. 3A

Operate line-finding tool to extract caliper information —— 332

Generate projection signal by normalizing projection data from each caliper —— 334

Generate filter signal from projection signal —— 336

Determine index value by finding caliper edge nearest to expected line segment —— 338

FIG. 3B

400a

405a 410a 4115a

X⟶

# FIG. 4A

runtime projection signal

410b

405b

405b

400b

415b

trained projection signal

X⟶

# FIG. 4B

FIG. 4C

FIG. 4D

Operate line-finding tool to extract caliper information from runtime image — 510

Determine projection index in runtime image — 520

Determine filter index in runtime image — 530

Refine found edge sub-pixel position — 540

Fit line using refined sub-pixel position — 550

FIG. 5A

Determine projection signal — 522

Extract best path by warping train and runtime projection signal — 524

Determine projection index — 526

FIG. 5B

FIG. 5C

FIG. 5D

600a

605a

FIG. 6A

Dist = 1.9542

610b

605b

615b

FIG. 6B

Dist = 0.5010

610c

605c

615c

FIG. 6C

**FIG. 7A**

**FIG. 7B**

**FIG. 7C**

FIG. 8A

FIG. 8B

FIG. 8C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02077913 A

- US 10152780 B, Hsu

**Non-patent literature cited in the description**

- Caliper Tool & Edge Detection Video Tutorial - Image-Pro Premier. Media Cybernetics